Europäisches Patentamt

European Patent Office

Office européen des brevets

(11) Veröffentlichungsnummer: **0 276 764**
**A2**

(12) **EUROPÄISCHE PATENTANMELDUNG**

(21) Anmeldenummer: **88100884.1**

(51) Int. Cl.⁴: **F03D 3/06**

(22) Anmeldetag: **21.01.88**

(30) Priorität: **23.01.87 DE 3702001**

(43) Veröffentlichungstag der Anmeldung:
**03.08.88 Patentblatt 88/31**

(84) Benannte Vertragsstaaten:
**AT BE CH DE ES FR GB GR IT LI LU NL SE**

(71) Anmelder: **Bentzel & Herter Wirtschafts- und Finanzberatungs GmbH**
**Garmischer Strasse 10**
**D-8000 München 2(DE)**

(72) Erfinder: **Herter, Erich**
**Wickenweg 2**
**D-8011 Heimstetten(DE)**
Erfinder: **Herter, Gunnar**
**Pernerkreppe 22**
**D-8000 München 22(DE)**

(74) Vertreter: **Patentanwälte Müller-Boré, Deufel, Schön, Hertel, Lewald, Otto**
**Isartorplatz 6**
**D-8000 München 2(DE)**

(54) **Windturbine.**

(57) Ein Windfangblatt (52) einer Windturbine weist vorzugsweise an den Enden Tragflächen (56) auf. Innerhalb des Kreises, der von dem Windfangblatt (52) umlaufen wird, ist an der Tragfläche (56) ein Gelenk (60) ausgebildet, an welchem ein Rotorarm (62) angeschlossen ist. Das Gelenk (60) ist insbesondere in Abhängigkeit von dem Gewicht des Windfangblattes (52) vor, im Bereich oder hinter der Profilspitze (58) des Windfangblattes (52) angeordnet. An der Tragfläche (56) ist in Drehrichtung vor der Profilspitze des Windfangblattes (52) ein Ausgleichsgewicht (66) vorgesehen. Dieses Ausgleichsgewicht (66), das selbsteinstellbar ist, gleicht den Einfluß der Form des Windfangblattes, der Fliehkraft, des Auftriebs und des Luftwiderstandes des rotierenden Windfangblattes aus.

Fig. 2

# Windturbine

Die Erfindung betrifft eine Windturbine mit einem an einem Mast gelagerten Rotor mit mindestens einem an Rotorarmen um eine vertikale oder geneigte Achse schwenkbar angeordneten Windfangblatt, wobei das Windfangblatt mit einer Masse zu seiner Selbststabilisierung in Bezug auf den Umlaufkreis versehen ist.

Windturbinen der genannten Art sind bekannt und es werden viele Bemühungen angestellt, solche Turbinen zu optimieren, um in Bezug auf die Windgeschwindigkeit ein Vielfaches der Umlaufgeschwindigkeit, d.h. hohe Drehzahlen zu erreichen. Ansatzpunkte hierfür sind beispielsweise besondere Gestaltung der Profile der Windfangblätter, deren Einstellbarkeit während des Umlaufes und Anordnungen und Ausbildungen des Rotors mit Windfangblättern derart, daß sich die Windfangblätter beim Umlauf nicht gegenseitig stören. Insbesondere die Beweglichkeit der Windfangblätter an den Rotorarmen ist mit einem relativ hohen Aufwand verbunden, der nicht nur wegen der optimalen Einstellung der Windfangblätter während ihres Umlaufes in Kauf genommen wurde, sondern auch um derartigen Turbinen selbst Anlaufeigenschaften zu vermitteln.

Der Erfindung liegt die Aufgabe zugrunde, eine Windturbine der genannten Art dahingehend zu verbessern, daß sie ohne besondere Einstellmaßnahmen bzw. Stellmittel selbst anlaufen kann und sich das Windfangblatt bzw. die Windfangblätter beim Umlauf selbststabilisierend auf ihre optimale Stellung einstellen, ohne daß dazu große Gewichte erforderlich sind und nicht beherrschbare Massenkräfte auftreten.

Diese Aufgabe wird erfindungsgemäß dadurch gelöst, daß der Drehpunkt der Aufhängung des Windfangblattes innerhalb des Kreises liegt, der von dem rotierenden Windfangblatt beschrieben wird, und daß der Drehpunkt in Abhängigkeit von dem Gewicht des Windfangblattes vor, neben oder hinter der Profilspitze des als Auftriebsprofil ausgebildeten Windfangblattes angeordnet ist.

Gemäß einer bevorzugten Ausführungsform ist das Windfangblatt an den Enden oder im Verlauf seiner Erstreckung an senkrecht zur Windfangblattachse angeordneten Tragflächen angeschlossen.

Gemäß einer weiteren bevorzugten Ausführungsform sind an dem Windfangblatt waagerecht sich erstreckende Tragflügel angeordnet und das Windfangblatt ist über an den Tragflügeln befestigten Zugelementen mit der Rotorachse verbunden. Das Zugelement kann dabei ein Seil, beispielsweise ein Drahtseil sein.

An den Tragflächen ist vorzugsweise ein Ausgleichsgewicht vor dem Drehpunkt angeordnet.

Gemäß einer Weiterbildung der Erfindung ist das Ausgleichsgewicht selbsteinstellend abhängig von der Größe der Fliehkraft in einem Langloch verschiebbar oder in einem Zylinder verdrehbar. Das Langloch ist dabei vorzugsweise zur Vorderkante der Tragfläche gerichtet.

Zur Ausbildung eines zusätzlichen Schubes beim Anlaufen der Turbine durch auftreffenden Wind verjüngen sich die Tragflügel vorzugsweise zu ihren hinteren Enden hin.

Das Windfangblatt ist mit einer Masse zu seiner Stellungsstabilisierung in Bezug auf den Umlaufkreis versehen. Durch die frei pendelnde Anordnung des Windfangblattes am Rotorarmende kann das Windfangblatt nahezu jede beliebige Stellung in Bezug auf sein Gelenk einnehmen, wodurch bei nicht laufendem Rotor und aufkommendem Wind früher oder später eine Stellung eingenommen wird, bei der sich eine Antriebskomponente in Drehrichtung ergibt. Sobald der Rotor läuft, beginnt die auftretende Zentrifugalkraft sich zwangsläufig an der Masse auszuwirken, die dann, insbesondere bei weiterer zunehmender Umlaufgeschwindigkeit, das ganze Windfangblatt bezüglich seiner Stellung zur kreisförmigen Umlaufbahn optimal einstellt und in dieser Stellung stabilisiert.

Das Windfangblatt ist vorzugsweise an den Enden an Flächen angeschlossen, die an den Rotorarmenden angelenkt sind. Das zum Gesamtmassenschwerpunkt zählende Windfangblatt steht in seiner Form zu einem Ausgleichsgewicht, das in Drehrichtung vor dem Windfangblatt angeordnet ist, und den Einfluß der Windfangblattform, der Fliehkraft, des Auftriebs und des Luftwiderstandes des rotierenden Windfangblattes ausgleicht.

Ausführungsbeispiele der Erfindung werden nachstehend anhand der Zeichnung näher erläutert. Es zeigt:

Fig. 1 eine Windturbine in Seitenansicht,

Fig. 2 einen Schnitt durch ein Windfangblatt am Ende eines Rotorarmes,

Fig. 3 einen Schnitt durch eine weitere Ausführungsform eines Windfangblattes, das über Zugseile mit der Rotorachse verbunden ist,

Fig. 4 eine abgewandelte Windturbine in Seitenansicht,

Fig. 5 den oberen Anschluß eines Windfangblattes an einem Rotorarm,

Fig. 6 einen mittleren Anschluß eines Windfangblattes an einen Rotorarm,

Fig. 7 eine weitere Ausführungsform einer Windturbine,

Fig. 8 in vergrößerter Darstellung den Anschluß einer Tragfläche an einem Windfangblatt, und

Fig. 9 eine Draufsicht auf eine Tragfläche der Windturbine nach Fig. 7.

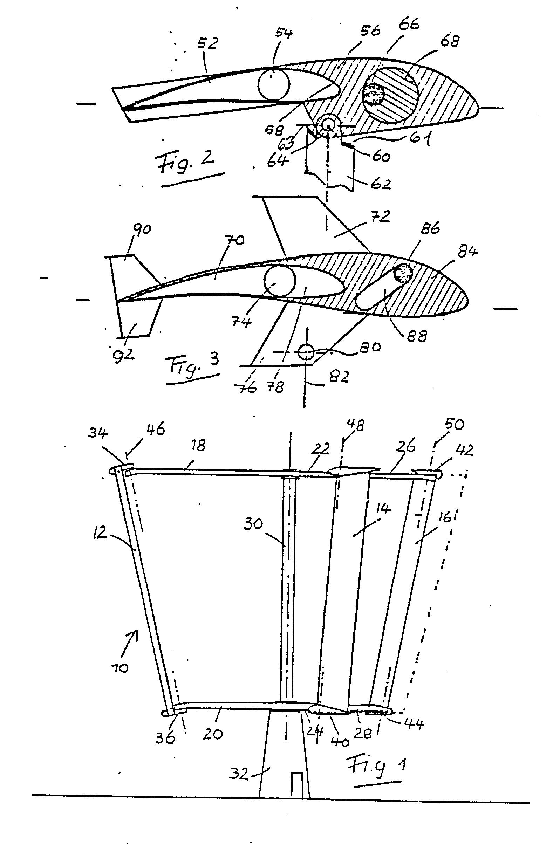

Fig. 1 zeigt eine Windturbine mit einem Vertikalrotor 10, an welchem Windfangblätter 12, 14, 16 angeordnet sind. Die Windfangblätter 12, 14, 16 sind über Rotorarme 18, 20, 22, 24 bzw. 26 und 28 mit einer Vertikalachse 30 verbunden. Die Vertikalachse 30 ist in einem Fundament 32 gelagert, welches gleichzeitig zur Aufnahme eines nicht gezeigten Generators dient. Das kegelstumpfförmig ausgebildete Fundament 32 ist über eine Tür zugänglich.

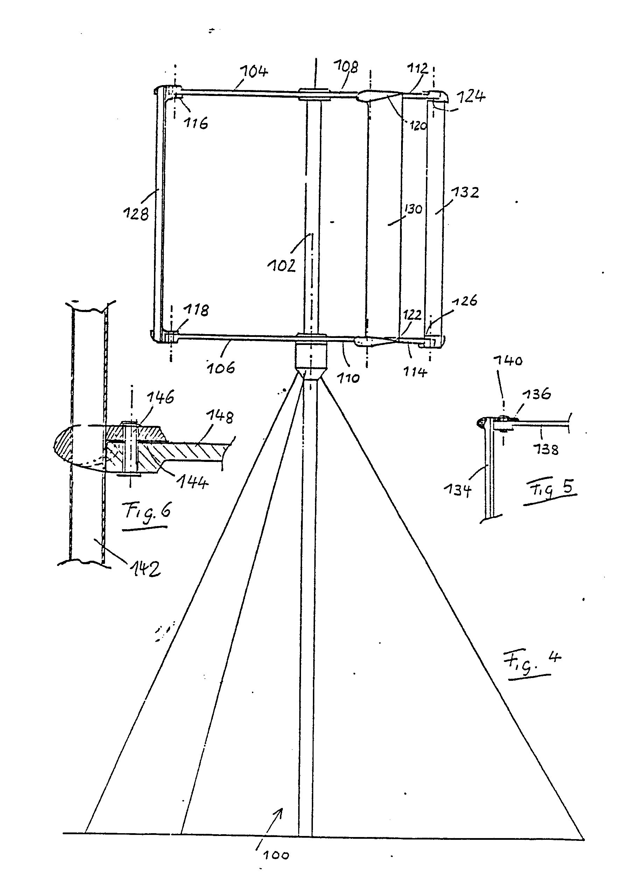

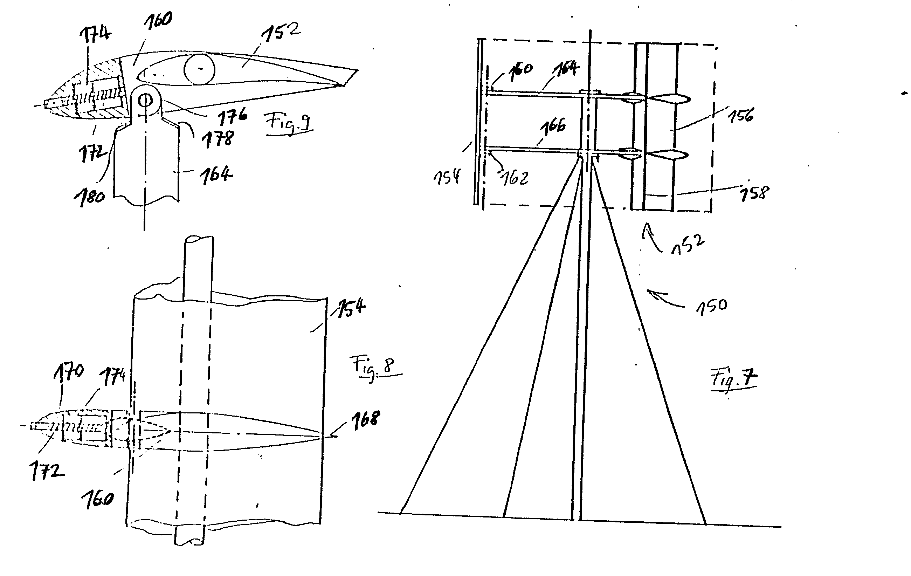

Die Windfangblätter 12, 14, 16 sind gegenüber der Rotorachse 30 nach oben hin divergierend angeordnet und weisen einen Querschnitt auf, wie er anhand der Fig. 2 und 3 dargestellt ist. An den Enden der Windfangblätter 12, 14 und 16 sind Tragflächen 34, 36, 38, 40 und 42, 44 angeordnet. Das Windfangblatt 12 ist um eine Achse 46 verschwenkbar, die durch die Tragflächen 34 und 36 und die Enden der Rotorarme 18 und 20 verläuft. Entsprechende Achsen 48 bzw. 50 sind an den Windfangblättern 14 bzw. 16 vorgesehen.

Fig. 2 zeigt ein Windfangblatt 52, das ein asymmetrisches Auftriebsprofil aufweist. Innerhalb des Windfangblattes 52 ist ein Verstärkungsrohr 54 angeordnet. An dem in Fig. 2 gezeigten unteren Ende des Windfangblattes ist eine Tragfläche 56 befestigt, die etwa im vorderen Bereich der Profilspitze 58 des Windfangblattes 52 ein Schwenklager 60 aufweist. An diesem Schwenklager 60 ist ein Rotorarm 62 angelenkt. Die Schwenkachse 64 des Windfangblattes 52 um den Rotorarm 62 verläuft durch das Schwenklager 60. Gegenüber der Profilspitze 58 des Windfangblattes 52 ist an der Fläche 56 ein Ausgleichsgewicht 66 angeordnet, das in einem Zylinder 68 verdreh-und feststellbar ist. Dieses Gewicht erhält je nach Größe der Fliehkraft eine entsprechende Stellung innerhalb des Zylinders 68, so daß dem an dem Windfangblatt 52 angreifenden Auftrieb entgegengewirkt werden kann.

Die Lage des Gelenkes 60 gegenüber dem Windfangblatt 52 ist abhängig von der Form des Windfangblattes, der Größe der Fliehkraft, der Größe des Auftriebs und der Größe des Luftwiderstandes. Die Masse des Windfangblattes 52 ist außerhalb des Drehpunktes 60 vorgesehen. Das durchgehende Windfangblatt 52 ist in die Tragflächen 56 eingehängt. Zur Begrenzung der Schwenkbewegung des Windfangblattes 52 gegenüber dem Rotorarm 62 sind an diesem Anschläge 61, 63 ausgebildet.

Bei der in Fig. 3 gezeigten Ausführungsform ist ein Windfangblatt 70 an den Enden an waagerechten Tragflächen 72 angeschlossen. Das Windfangblatt 70 weist ein asymmetrisches Auf triebsprofil auf und ist mit einer durchgehenden Verstärkung 74 versehen. Die Tragfläche 72 ist in etwa Y-förmig ausgebildet, so daß Stabilisierungsflossen 74 und 76 im vorderen Profilbereich 78 des Windfangblattes 70 angeordnet sind. An dem Flächenbereich 76 ist ein Gelenk 80 vorgesehen, an welchem ein Zugelement, z.B. ein Drahtseil 82 angelenkt ist. Das Gelenk 80 ist im Bereich der Profilspitze 78 des Windfangblattes 70 angeordnet. Vor der Profilspitze 78 des Windfangblattes 70 ist in einem Flächenabschnitt 84 ein Ausgleichsgewicht 86 in Form einer Rolle in einem Langloch 88 verschiebbar geführt. Dieses Gewicht 86 nimmt in dem Langloch 88 eine Stellung ein, die von dem Auftrieb und der Fleihkraft abhängt. Am hinteren Ende des Windfangblattes 70 sind Stabilisierungsflächen oder Winglettes 90 und 92 angeordnet, welche dem Windfangblatt einen seitlichen Auftrieb verleihen.

Fig. 4 zeigt eine Windturbine 100 mit einer Vertikalachse 102, an welcher Rotorarme 104, 106, 108, 110, 110 und 114 befestigt sind. An diesen rotorarmen sind über Tragflächen 116 bis 126 Windfangblätter 128, 130 und 132 angelenkt. Fig. 5 zeigt ein Windfangblatt 134, das mit Endflächen 136 versehen ist. Diese Endflächen 136 übergreifen einen Rotorarm 138, der über ein Gelenk 140 an der Tragfläche 136 angeschlossen ist. Das Gelenk 140 liegt innerhalb des Kreises, der von dem Windfangblatt 134 umschrieben wird.

Fig. 6 zeigt ein Windfangblatt 142, das etwa im mittleren Bereich mit einer Tragfläche 144 versehen ist, die über ein Gelenk 146 an einen Rotorarm 148 angeschlossen ist. In der Tragfläche 144 kann ein Ausgleichsgewicht gemäß Fig. 2 oder 3 angeordnet sein.

Fig. 7 zeigt eine Windturbine 150 mit einem Vertikalrotor 152 mit Windfangblättern 154, 156, 158. Die Windfangblätter sind über Tragflächen 160, 162, die etwa in den Mittelpunkten angeordnet sind, an Rotorarmen 164, 166 angelenkt.

Fig. 8 zeigt das Windfangblatt 154 mit einer Tragfläche 160. Die Tragfläche 160 verjüngt sich zu ihrem hinteren Ende 168 hin. Dies bewirkt, daß während des Anlaufens ein zusätzlicher Schub durch den Wind erzeugt wird, der von dem Windfangblatt auf die Tragfläche geleitet wird.

Im vorderen Bereich 170 der Tragfläche 160 ist ein über eine Schraube 172 einstellbares Ausgleichsgewicht 174 angeordnet.

Fig. 9 zeigt die Anlenkung des Rotorarmes 164 an der Tragfläche 160. Das Gelenk 176 liegt innerhalb des Kreises, der von dem Windfangblatt 152 umschrieben wird, und im Bereich der Vorderkante des Windfangblattes.Zur Begrenzung der Schwenkbewegung des Windfangblattes 152 sind Anschläge 178, 180 am Ende des Rotorarmes 164 angeordnet.

Wenn das Windfangblatt nach außen gepfeilt ist, kann der Drehpunkt mit dem Rotorarm an der Außenseite der Tragfläche angeordnet sein. Es bleibt dabei gewährleistet, daß der Drehpunkt innerhalb des Kreises verbleibt, der von der Masse des Windfangblattes beschrieben wird.

## Ansprüche

1. Windturbine mit einem an einem Mast gelagerten Rotor mit mindestens einem an Rotorarmen um eine vertikale oder geneigte Achse schwenkbar angeordneten Windfangblatt, wobei das Windfangblatt mit einer Masse zu seiner Selbststabilisierung in Bezug auf den Umlaufkreis versehen ist, dadurch **gekennzeichnet,** daß der Drehpunkt (64, 80) der Aufhängung des Windfangblattes (52, 70) innerhalb des Kreises liegt, der von dem rotierenden Windfangblatt (52, 70) beschrieben wird, und daß der Drehpunkt (64, 80) in Abhängigkeit von dem Gewicht des Windfangblattes (52, 70) vor, neben oder hinter der Profilspitze (58, 78) des als Auftriebsprofil ausgebildeten Windfangblattes (52, 70) angeordnet ist.

2. Windturbine nach Anspruch 1, dadurch **gekennzeichnet,** daß das Windfangblatt (52, 70) an den Enden oder im Verlauf seiner Erstreckung an senkrecht zur Windfangblattachse angeordneten Tragflächen (56, 72) angeschlossen ist.

3. Windturbine nach Anspruch 1, dadurch **gekennzeichnet,** daß an dem Windfangblatt waagerecht sich erstreckende Tragflügel angeordnet sind, und daß das Windfangblatt über an den Tragflügeln befestigte Zugelemente mit der Rotorachse verbunden ist.

4. Windturbine nach Anspruch 3, dadurch **gekennzeichnet,** daß das Zugelement ein Seil ist.

5. Windturbine nach einem der Ansprüche 1 bis 4, dadurch **gekennzeichnet,** daß an den Tragflächen (56, 72) ein Ausgleichsgewicht (66, 86) in Drehrichtung des Windfangblattes vor dem Drehpunkt (60, 80) angeordnet ist.

6. Windturbine nach Anspruch 5, dadurch **gekennzeichnet,** daß das Ausgleichsgewicht (66, 86) selbsteinstellend abhängig von der Größe der Fliehkraft, der Form des Windfangblattes, des Auftriebs und des Luftwiderstandes in einem Langloch verschiebbar oder in einem Zylinder (68) verdrehbar ist.

7. Windturbine nach Anspruch 6, dadurch **gekennzeichnet,** daß das Langloch zur Vorderkante der Tragfläche hin gerichtet ist.

8. Windturbine nach einem der Ansprüche 1 bis 7, dadurch **gekennzeichnet,** daß die Tragflächen sich zu ihrem hinteren Ende hin verjüngen.

9. Windturbine nach Anspruch 1, dadurch **gekennzeichnet,** daß der Drehpunkt zur Aufhängung des Windfangblattes in Nähe der Profilspitze des asymmetrischen Windfangblattes liegt und Hebelarm und Fliehkraftmasse so abgestimmt sind, daß bei der größten Anströmgeschwindigkeit der Einzelflügel bei vorgegebenem Auftriebskoeffizienten selbsttätig seinen zum geringsten Gleitwiderstand zugehörigen Winkel zur Anströmrichtung einstellt.

0 276 764

Fig. 2

Fig. 3

Fig 1

Fig. 6

Fig 5

Fig. 4

174  160  152

176  Fig.9

172  178

180  164

154

170  174  Fig. 8

172  168

160

160  164

166  156

154  162  158

152

150

Fig. 7

0 276 764